# FASCICULE DE BREVET EUROPEEN

(11) **EP 2 861 459 B1**
(45) Date de publication et mention de la délivrance du brevet: **06.06.2018**
(21) Numéro de dépôt: 12737579.8
(22) Date de dépôt: 19.06.2012
(51) Int. Cl.: B60N 2/58, B60N 2/60

(54) **DISPOSITIF DE FIXATION/PLACAGE D'UN REVETEMENT EXTERIEUR CONTRE UNE COUCHE DE MOUSSE FIXEE A UNE PAROI DE LA STRUCTURE D'UN DOSSIER D'UN SIEGE**
VORRICHTUNG ZUM FIXIEREN/LAMINIEREN EINES ÄUSSEREN SITZBEZUGES GEGEN EIN AUF EINER SITZGESTELLWAND EINES SITZKISSENS BEFESTIGTES SCHAUMPOLSTER
DEVICE FOR FIXING/LAMINATING AN EXTERNAL COVER AGAINST A FOAM PADDING FIXED TO A WALL OF THE FRAME OF A SEAT CUSHION.

(43) Date de publication de la demande: 22.04.2015
(73) Titulaire: Steelcase Inc., Grand Rapids, Michigan 49501-1967 (US)
(72) Inventeur: OBERLE, Jean-Marc, F-67201 Eckbolsheim (FR); VIEGAS, Louis, F-67310 Wasselonne (FR); MARECHAL, Thierry, F-67205 Oberhausbergen (FR)
(74) Mandataire: Littolff, Denis
(86) Numéro de dépôt international: PCT/FR2012/051369
(87) Numéro de publication internationale: WO 2013/190186

(56) Documents cités:
- FR-A3- 2 486 922
- GB-A- 2 025 558

## Description

L'invention concerne un dispositif de fixation/placage d'un revêtement extérieur contre une garniture de type couche élastique d'épaisseur e de mousse fixée à la structure d'une assise ou d'un dossier d'un siège.

Un tel dispositif vise à plaquer le revêtement extérieur, typiquement un tissu souple, de manière à ce que ce dernier épouse la forme de la garniture du dossier ou du siège, et qu'il n'y ait pas de zone où le revêtement extérieur est tendu par rapport à la mousse lorsque celle-ci présente une concavité, formant ainsi un vide disgracieux entre le revêtement extérieur tendu et la mousse, car il ne restitue pas le profil réel du dossier.

Jusqu'à présent, ce problème de placage est résolu de manière indirecte en joignant différents morceaux de revêtements les uns aux autres dans un même dossier, chaque morceau de revêtement correspondant à une zone de mousse ayant une forme prédéfinie, de manière à ce que les morceaux de revêtement, une fois solidarisés les uns aux autres, suivent en intégralité la forme donnée par la mousse. En d'autres termes, il n'était pas question d'utiliser une unique pièce de tissu pour des formes complexes du dossier.

Cela est notamment le cas dans des sièges et des dossiers utilisés dans le domaine de l'automobile.

De manière générale, ces morceaux de revêtement sont attachés par des coutures et fixés souvent périphériquement au moyen de connecteurs mâles aptes à venir se clipser dans des connecteurs femelles préinsérés dans la mousse du siège ou du dossier.

Le clipsage entre le connecteur mâle et le connecteur femelle est alors réalisé à l'intérieur de la mousse, dans une zone creuse prévue à cet effet.

Les documents JP 2011156252 et WO 201124675 ou encore US 20080224509 divulguent de tels dispositifs de placage, qui présentent l'inconvénient d'une mise en oeuvre fastidieuse et longue au vu du nombre de jonctions à réaliser et, de surcroît, non aisée car réalisée en partie en aveugle au sein de la mousse.

Le morcellement du revêtement extérieur complique sa fixation à la structure et à la mousse et confère au dossier et au siège un aspect inesthétique de l'extérieur.

Les connecteurs mâles et les connecteurs femelles sont de plus des composants relativement élaborés, entraînant ainsi un coût supplémentaire pour la fabrication du siège.

Il existe également des dispositifs de placage réalisés à partir de boutons de capitonnage.

Ces boutons sont davantage utilisés pour la décoration de canapés ou de fauteuils. Ils sont composés d'une tête relativement épaisse et bien visible de l'extérieur puisqu'il s'agit d'un élément décoratif, et d'une tige ayant un embout en forme de pointe, de manière à pouvoir piquer le bouton dans la garniture rembourrée du fauteuil.

Un clip est prévu pour que les boutons ne puissent pas être retirés du fauteuil.

À nouveau, il est donc nécessaire d'avoir à la fois une partie mâle (le bouton) et une partie femelle (le clip) pour pouvoir plaquer le revêtement contre le rembourrage du siège.

Les documents US 5214811, GB 2025558 et US 3771199 divulguent de tels boutons de capitonnage.

Ces boutons de capitonnage présentent l'inconvénient d'avoir une tête relativement épaisse et imposante et qui peut donc constituer une gêne dans le dos de l'utilisateur lorsque celui-ci s'adosse au dossier d'un siège par exemple.

Par ailleurs, ces boutons ne permettent pas au revêtement d'épouser la forme de la garniture rembourrée car ils la compressent fortement dès lors qu'ils sont clipsés. Ils créent des zones de compression dans le fauteuil, supposées être décoratives.

Ainsi, le but de l'invention est de proposer un dispositif de fixation/placage d'un revêtement extérieur contre une couche de mousse fixée à la structure d'une assise ou du dossier d'un siège qui soit simple de mise en oeuvre, qui permette à un revêtement d'une seule pièce d'épouser la forme de la mousse, et qui ne présente pas de gêne lorsque l'utilisateur s'assoit sur le siège ou s'adosse au siège, et ce, quel que soit l'état de la compression de la mousse.

À cet effet, la présente invention concerne un dispositif de fixation/placage selon la revendication 1. La garniture consiste en une couche élastique d'épaisseur e de mousse fixée à la structure du dossier.

L'embout est clipsable élastiquement dans le connecteur consistant en un orifice d'une paroi de la structure, la longueur / entre la tête de la broche et l'embout étant prévue pour que la tête s'appuie sur le revêtement contre la mousse, la liaison mécanique entre la broche et la structure permettant un débattement axial d de la broche d'amplitude inférieure à e.

Cette broche présente ainsi l'avantage d'avoir une tête d'allure plane qui ne soit donc pas perceptible pour le dos de l'utilisateur lorsque celui-ci s'adosse sur le dossier du siège.

Par ailleurs, la broche est clipsable directement dans la paroi de la structure du dossier. En effet, le connecteur est directement intégré dans la structure du dossier, et consiste en une paroi de la structure dans laquelle est pratiqué un orifice. Il n'est donc pas nécessaire de fabriquer une partie mâle spécifique et indépendante de la structure de la chaise pour permettre le clipsage de la broche et ainsi le maintien du revêtement plaqué contre la mousse. Ce dispositif est ainsi grandement simplifié par rapport aux dispositifs connus de l'art antérieur.

Avantageusement, la fixation de la broche dans la structure se fait de manière instantanée et sans outil.

Un autre avantage réside dans le fait que la broche peut avoir un débattement axial (d) et s'adapte ainsi de manière instantanée à la compression de la mousse. En effet, la mousse est plus ou moins comprimée en fonction de la position de la personne sur le siège et en fonction de son poids également.

Pour le dossier du siège par exemple, lorsque la personne n'est pas adossée au siège, la mousse n'est pas comprimée. Dans ce cas, la tête de la broche s'appuie sur le revêtement contre la mousse quasiment sans la compresser.

Lorsque l'utilisateur s'adosse sur le dossier du siège et comprime la mousse, la broche est prévue de manière à pouvoir s'enfoncer également à l'intérieur du dossier par un déplacement axial de manière à ce qu'elle ne soit pas saillante par rapport au dossier du siège et que l'utilisateur ne la sente pas dans son dos.

La broche suit, en quelque sorte, le mouvement de compression de la mousse. Par conséquent, quel que soit l'état de compression de la mousse, le revêtement extérieur est toujours bien plaqué contre la mousse et la broche n'est jamais perçue par l'utilisateur.

Selon l'invention, le débattement axial (d) de la broche est délimité par deux butées, la première butée étant activée dans la direction d'insertion de la tige à travers la couche de mousse et la structure de manière à limiter son insertion dans l'orifice, la seconde butée étant activée dans la direction de retrait de la tige de manière à l'empêcher de ressortir de l'orifice.

Plus précisément, chaque butée consiste en une face de blocage en translation de la broche orientée perpendiculairement à la direction d'insertion de la broche dans l'orifice et située en vis-à-vis de la paroi de la structure dans laquelle est pratiqué l'orifice, ladite face de blocage en translation étant apte à venir au contact de ladite paroi de la structure.

Concrètement, lorsque la mousse n'est pas compressée, la seconde butée est au contact de la paroi de la structure, tandis que, lorsque la mousse est compressée au maximum, c'est la première butée qui est au contact de la paroi de la structure.

Selon l'invention, la première butée consiste en un épaulement qui marque la limite entre une portion intermédiaire de la tige et une portion de surépaisseur de la tige rejoignant la tête de la broche, et en ce que la seconde butée marque la limite entre ladite portion intermédiaire et l'embout de clipsage de la tige.

Cette zone de surépaisseur de la tige présente l'avantage de renforcer la jonction entre la tige et la tête.

L'embout de la broche avec l'épaulement assure, quant à lui, deux fonctions, à savoir la fonction de clipsage de la broche dans la structure et la fonction de limitation du débattement de la broche au sein du dossier.

En pratique, la longueur de la portion de surépaisseur s de la tige est inférieure ou égale à l'épaisseur de la couche de mousse en état de compression.

De cette manière, même lorsque la couche de mousse est compressée au maximum, la tête de la broche ne saillera jamais la couche de mousse.

Par conséquent, quel que soit l'état de compression de la couche de mousse, la zone de surépaisseur de la tige sera toujours comprise à l'intérieur de l'épaisseur de la mousse et la tête de la broche restera en périphérie sans saillir.

Pour permettre ce débattement de la broche, un espace creux est prévu dans la structure en aval de l'orifice dans la direction d'insertion de la tige, la profondeur dudit espace creux correspondant au moins à la distance p séparant la première butée de l'extrémité de l'embout.

De cette manière, lorsque la première butée est en contact avec la paroi de la structure, c'est-à-dire lorsque la mousse est comprimée au maximum, toute la partie de la tige en aval de la première butée est contenue dans cet espace creux et ne jaillit pas au-delà de la limite arrière du dossier.

Elle est ainsi entièrement cachée dans la structure à l'intérieur du dossier.

Un tel espace creux est généralement facilement réalisable, car les structures actuelles sont moulées ou thermoformées, de manière à présenter une structure alvéolée, donc avec de nombreux espaces creux, reliés par des zones de renfort.

Selon une possibilité, l'embout de la tige de la broche consiste en un tenon s'affinant vers son extrémité libre et facilitant ainsi l'insertion de la tige dans l'orifice. Ce tenon comprend des ailettes périphériques aptes à se déformer élastiquement vers l'axe de la tige lors de l'engagement du tenon dans l'orifice pour le clipsage.

Il n'est pas nécessaire que l'extrémité libre de l'embout ait une forme pointue. Une forme arrondie peut tout à fait convenir.

L'envergure des ailettes est légèrement supérieure à l'ouverture de l'orifice. Leur insertion est tout de même possible par une légère déformation élastique lors de l'introduction de l'embout dans l'orifice. Les ailettes reprennent ainsi leur forme initiale après leur introduction dans l'orifice et le retrait de la broche n'est ainsi plus possible.

De préférence, la broche comprend deux tiges identiques d'allure parallèle aptes à s'insérer dans deux orifices pratiqués dans ladite paroi de la structure.

Le fait d'avoir deux tiges permet d'agrandir la surface de la tête de la broche et ainsi d'agrandir la surface de placage du revêtement contre la couche de mousse.

Le placage en lui-même est également plus résistant à l'aide de deux tiges.

Avantageusement, la couche de mousse a une allure générale reproduisant la courbure de la partie lombaire du dos d'un utilisateur, ladite courbure comprenant une partie concave se prolongeant par une partie convexe ayant ensemble une allure sinusoïdale, ladite broche étant placée à la jonction entre la partie concave et la partie convexe et étant apte à se déplacer en translation selon un débattement axial d prédéterminé par rapport à la paroi de la structure du dossier du siège.

En effet, c'est bien lors du changement de courbe que le revêtement extérieur a tendance à être tendu et à ne plus épouser la forme de la couche de mousse. C'est donc à cet emplacement privilégié qu'il faut placer la broche.

L'invention va à présent être décrite plus en détail, en référence aux figures annexées, pour lesquelles :
- la figure 1 est une vue en coupe d'un dispositif de fixation/placage selon l'invention ;
- la figure 2 est une vue agrandie de la broche ;
- la figure 3 montre la structure intérieure du dossier sur laquelle repose une couche de mousse ;
- la figure 4 représente la broche insérée dans la structure du dossier, sans la couche de mousse ;
- la figure 5 illustre la broche insérée dans la structure du dossier lorsque la couche de mousse n'est pas compressée ;
- la figure 6 illustre la broche insérée dans la structure du dossier lorsque la couche de mousse est comprimée.

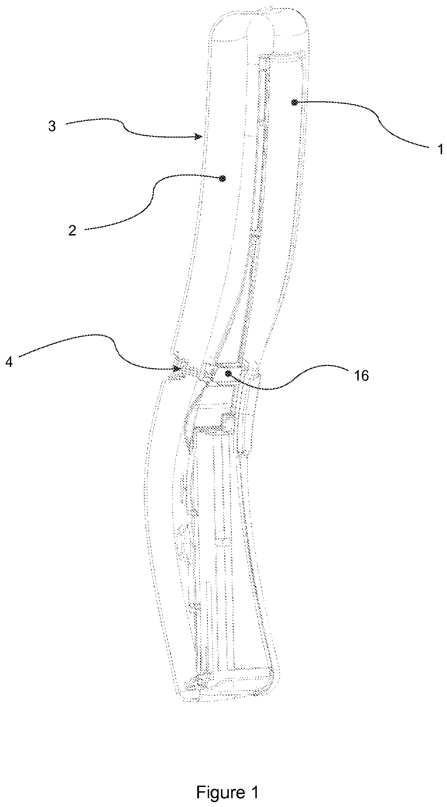

En référence à la figure 1, le dossier du siège est principalement composé de trois parties :
- une structure (1) rigide ;
- une couche de mousse (2) élastique fixée à la structure (1) ;
- un revêtement (3) extérieur, de préférence en tissu, qui recouvre toute la couche de mousse (2), et qui définit l'aspect esthétique du dossier.

La couche de mousse (2) reproduit sensiblement la forme de la courbure lombaire d'une personne, de manière à ce que le dos de l'utilisateur repose sur toute la surface du dossier, et pas seulement sur une zone précise du dossier. Cette forme de la couche de mousse (2) améliore ainsi considérablement le confort de l'utilisateur.

Cette courbure comprend une partie concave se prolongeant par une partie convexe ayant ensemble une allure sinusoïdale.

Le revêtement (3) est attaché à la bordure périphérique de la structure (1) du dossier de manière à recouvrir la couche de mousse (2) et est tendu. Il ne prend donc pas naturellement la forme de la courbure de la couche de mousse (2), et n'épouse donc pas la forme de la couche de mousse à divers endroits.

Un dispositif de placage du revêtement (3) contre la couche de mousse (2) est ainsi prévu au niveau du changement de courbure du dossier.

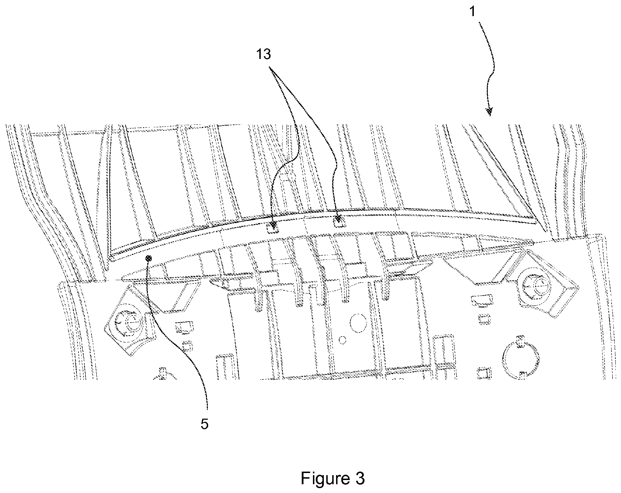

Plus précisément, une broche de fixation (4) s'appuie contre le revêtement (3), traverse la mousse (2) et vient se clipser dans une paroi (5) (voir figures 3 à 6) de la structure (1) du dossier.

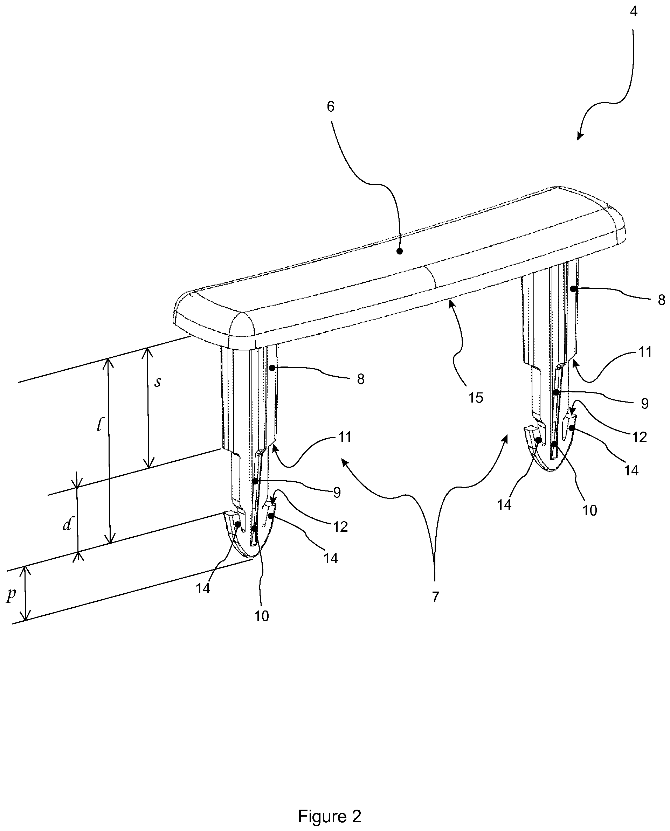

La figure 2 représente en détail cette broche (4). Elle est dotée d'une tête (6) d'allure plane et de deux tiges (7) parallèles s'étendant sensiblement orthogonalement par rapport à la tête (6). Chaque tige (7) est constituée :
- d'une portion de surépaisseur (8) rejoignant la tête (6) de la broche (4) ;
- d'une portion intermédiaire (9) plus fine ;
- d'un embout (10) à l'extrémité libre de la tige (7).

L'embout (10) est prévu pour se clipser dans la paroi (5) de la structure (1) du dossier, tel un tenon. Il s'affine vers son extrémité, et ses côtés sont formés par deux ailettes (14) constituées dans une matière apte à être déformée élastiquement.

La limite entre la portion de surépaisseur (8) et la portion intermédiaire (9) plus fine est marquée par un épaulement qui consiste en une première butée (11).

La limite entre la portion intermédiaire (9) et l'embout (10) est marquée par l'extrémité libre des ailettes (14) qui saille de la portion intermédiaire (9), et qui consiste en une seconde butée (12).

Ces deux tiges (7) sont aptes à être insérées dans deux orifices (13) pratiqués dans une paroi (5) de la structure (1) du dossier, comme cela est illustré en figure 3. La dimension de chaque orifice (13) est légèrement inférieure à l'envergure des ailettes (14) de l'embout (10), et son insertion n'est donc possible que par déformation élastique des ailettes (14) vers l'axe de la tige (7) permettant ainsi un clipsage de l'embout (10).

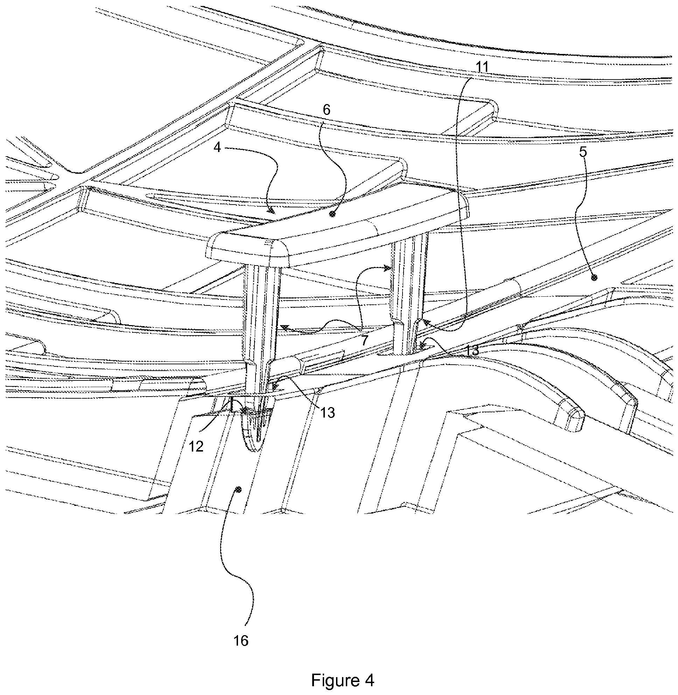

La figure 4 illustre la broche (4) clipsée dans les deux orifices (13) de la paroi (5) de la structure (1) du dossier. Pour plus de clarté, la couche de mousse (2) n'est pas visible.

Une fois la broche (4) ainsi clipsée, elle peut librement translater selon un débattement axial (d) délimité par les deux butées (11, 12) citées précédemment. Concrètement, le débattement axial (d) correspond à la longueur des portions intermédiaires (9) des tiges (7).

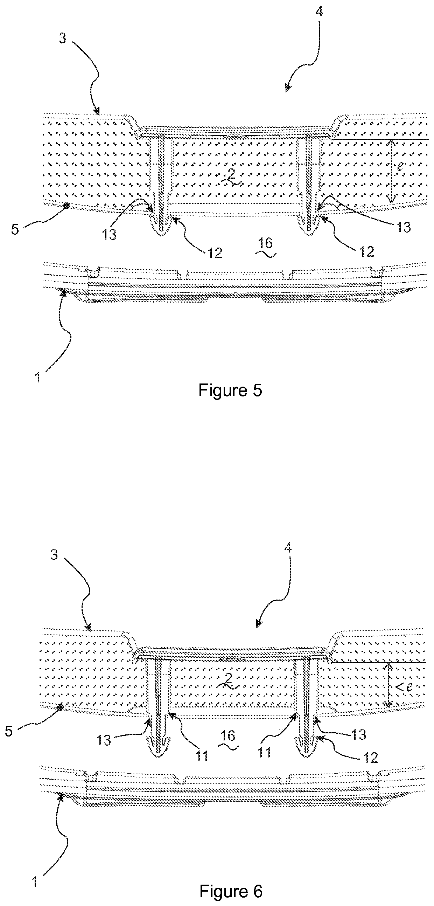

En figure 5, la broche (4) est dans une première position clipsée, avec la seconde butée (12) de chaque tige (7) en contact avec la paroi (5) de la structure (1) du dossier, de manière à empêcher la broche (4) de sortir des orifices (13). La couche de mousse (2) n'est pas compressée, et la broche (4) est dans une position sortie au maximum. La distance (1) entre la seconde butée (12) et la tête (6) de la broche (4) définit l'épaisseur (e) de mousse qu'il peut y avoir au maximum au niveau de la broche (4). La couche de mousse (2) étant élastique, elle a tendance à exercer une force sur la face intérieure (15) de la broche (4) en direction de l'extérieur, de manière à la faire sortir au maximum.

Lorsqu'un utilisateur vient s'adosser, la pression de son dos vient compresser la couche de mousse (2) élastique, et la broche (4) suit cette compression en se rapprochant de la structure (1) du dossier. Comme illustré en figure 6, les tiges (7) de la broche (4) pénètrent plus profondément dans les orifices (13). Ce débattement axial de la broche (4) est limité par sa première butée (11) qui vient au contact de la paroi (5) de la structure (1) du dossier. Dans ce cas, la broche (4) est en position rentrée, et la mousse (2) est en état de compression. L'épaisseur de la couche de mousse (2) comprimée ne doit pas être inférieure à la longueur (s) de la portion de surépaisseur des tiges (7) (c'est-à-dire la distance entre la première butée (11) et la tête (6) de la broche (4)), auquel cas la tête (6) de la broche (4) jaillirait par rapport à la surface extérieure de la couche de mousse (2), et, non seulement ne plaquerait plus le revêtement (3) contre la couche de mousse (2), mais deviendrait en plus une gène dans le dos de l'utilisateur et provoquerait ainsi une sensation désagréable.

Un espace creux (16) est prévu au sein de la structure (1) du dossier, en aval des orifices (13) à l'arrière du dossier, de manière à contenir la partie de la tige (7) insérée dans l'orifice (13) lorsque la broche (4) est en position rentrée. Ainsi, la profondeur de cet espace creux (16) doit au moins correspondre à la distance (p) séparant la première butée (11) et l'extrémité de l'embout (10) de la tige (7).

Lors de l'utilisation normale de ce dossier de siège, la broche (4) suit en quelque sorte les mouvements de compression de la couche de mousse (2), de manière à toujours plaquer le revêtement (3) contre la couche de mousse (2) tout en passant inaperçue dans le dos de l'utilisateur.

## Revendications

1. Dispositif de fixation/placage d'un revêtement (3) extérieur contre un dossier d'un siège, comportant :
- une structure (1) de dossier présentant une bordure périphérique et un connecteur ;
- une garniture (2) couvrant la structure (1) du dossier ;
- un revêtement (3) attaché à la bordure périphérique de la structure (1) du dossier et recouvrant la garniture (2) ;
- un organe intermédiaire de type broche (4) de fixation doté d'une tête (6) extérieure appuyée sur le revêtement (3) et d'une tige (7) solidarisée à ladite tête (6) et s'étendant à travers la garniture (2), l'extrémité libre de la tige (7) consistant en un embout (10) se fixant dans le connecteur de telle sorte qu'un débattement axial de l'organe dans le connecteur se produise lorsqu'une pression est appliquée au revêtement (3) et à la garniture (2),
**caractérisé en ce que** la liaison mécanique entre la broche (4) et la structure (1) permet un débattement axial (d) de la broche (4), et **en ce que** le débattement axial (d) de la broche (4) est délimité par deux butées (11, 12), la première butée (11) étant activée dans la direction d'insertion de la tige (7) à travers la couche de mousse (2) et la structure (1) de manière à limiter son insertion dans l'orifice (13), la seconde butée (12) étant activée dans la direction de retrait de la tige (7) de manière à l'empêcher de ressortir de l'orifice (13), la première butée (11) consistant en un épaulement qui marque la limite entre une portion intermédiaire (9) de la tige (7) et une portion de surépaisseur (8) de la tige (7) rejoignant la tête (6) de la broche (4), et la seconde butée (12) marquant la limite entre ladite portion intermédiaire (9) et l'embout (10) de la tige (7).

2. Dispositif de fixation/placage selon la revendication 1, **caractérisé en ce que** la garniture (2) consiste en une couche élastique d'épaisseur (e) de mousse (2) fixée à la structure (1) du dossier, l'embout (10) étant clipsable élastiquement dans le connecteur consistant en un orifice (13) d'une paroi (5) de la structure (1), la longueur (1) entre la tête (6) de la broche (4) et l'embout (10) étant prévue pour que la tête (6) s'appuie sur le revêtement (3) contre la mousse (2).

3. Dispositif de fixation/placage selon la revendication précédente, **caractérisé en ce que** chaque butée (11, 12) consiste en une face de blocage en translation de la broche (4) orientée perpendiculairement à la direction d'insertion de la broche (4) dans l'orifice (13) et située en vis-à-vis de la paroi (5) de la structure (1) dans laquelle est pratiqué l'orifice (13), ladite face de blocage en translation étant apte à venir au contact de ladite paroi (5) de la structure (1).

4. Dispositif de placage selon l'une des revendications 2 et 3, **caractérisé en ce que** la longueur (s) de la portion de surépaisseur (8) de la tige (7) est inférieure ou égale à l'épaisseur de la couche de mousse (2) en état de compression.

5. Dispositif de placage selon l'une des revendications précédentes, **caractérisé en ce qu'**un espace creux (16) est prévu dans la structure (1) en aval de l'orifice (13) dans la direction d'insertion de la tige (7), la profondeur dudit espace creux (16) correspondant au moins à la distance (p) séparant la première butée (11) de l'extrémité de l'embout (10).

6. Dispositif de placage selon l'une quelconque des revendications précédentes, **caractérisé en ce que** l'embout (10) de la tige (7) de la broche (4) consiste en un tenon s'affinant vers son extrémité libre et comprenant des ailettes (14) périphériques aptes à se déformer élastiquement vers l'axe de la tige (7) lors de l'engagement du tenon dans l'orifice (13) pour le clipsage.

7. Dispositif de placage selon l'une des revendications précédentes, **caractérisé en ce que** la broche (4) comprend deux tiges (7) identiques d'allure parallèle aptes à s'insérer dans deux orifices (13) pratiqués dans ladite paroi (5) de la structure (1).

8. Dispositif de placage selon l'une des revendications précédentes **caractérisé en ce que** la couche de mousse (2) a une allure générale reproduisant la courbure de la partie lombaire du dos d'un utilisateur, ladite courbure comprenant une partie concave se prolongeant par une partie convexe ayant ensemble une allure sinusoïdale, ladite broche (4) étant placée à la jonction entre la partie concave et la partie convexe et étant apte à se déplacer en translation selon un débattement axial (d) prédéterminé par rapport à la paroi (5) de la structure (1) du dossier du siège.

## Patentansprüche

1. Vorrichtung zur Befestigung/Verblendung einer Außenverkleidung (3) an einer Sitzlehne, umfassend:
- eine Sitzlehnenstruktur (1) mit einer Umfangskante und einem Verbindungselement;
- eine Garnitur (2), die die Struktur (1) abdeckt;
- eine Verkleidung (3), die mit der Umfangskante der Struktur (1) verbunden ist und die Garnitur (2) deckt;
- ein fixierstiftartiges Zwischenstück (4) mit einem äußeren Kopf (6), der auf der Verkleidung (3) aufliegt, und einer mit dem Kopf (6) integrierten Stange (7), die sich quer über die Garnitur (2) erstreckt, wobei das freie Ende der Stange (7) aus einer Düse (10) besteht, die sich im Verbindungselement derart befestigt, dass ein axialer Bewegungsbereich des Zwischenstücks im Verbindungselement erzeugt wird, wenn die Verkleidung (3) und die Garnitur (2) mit Druck beaufschlagt werden,
**dadurch gekennzeichnet, dass** die mechanische Verbindung zwischen dem Stift (4) und der Struktur (1) einen axialen Bewegungsbereich (d) des Stifts (4) herstellt, und dass dass der axiale Bewegungsbereich (d) des Stifts (4) durch zwei Anschläge (11, 12) abgegrenzt ist, wobei der erste Anschlag (11) in der Einführungsrichtung der Stange (7) über die Schaumschicht (2) und die Struktur (1) aktiviert wird, um dessen Einführung in die Öffnung (13) zu begrenzen, wobei der zweite Anschlag (12) in der Rückzugsrichtung der Stange (7) aktiviert wird, um sie am Austreten aus der Öffnung (13) zu hindern, wobei der erste Anschlag (11) aus einer Schulter besteht, die die Grenze zwischen einem Zwischenabschnitt (9) der Stange (7) und einem überdicken Abschnitt (8) der Stange (7), die sich an den Kopf (6) des Stifts (4) anschließt, markiert, und wobei der zweite Anschlag (12) die Grenze zwischen dem Zwischenabschnitt (9) und der Düse (10) der Stange (7) markiert.

2. Vorrichtung nach Anspruch 1, **dadurch gekennzeichnet, dass** die Garnitur (2) aus einer elastischen Verdickungsschicht (e) aus Schaum (2) besteht, die an der Struktur (1) befestigt ist, wobei die Düse (10) elastisch aufrastbar ist im Verbindungselement, das aus einer Öffnung (13) einer Wand (5) der Struktur (1) besteht, wobei die Länge (1) zwischen dem Kopf (6) des Stifts (4) und der Düse (10) derart ist, dass der Kopf (6) auf der Verkleidung (3) und gegen den Schaum (2) aufliegt.

3. Vorrichtung nach dem vorstehenden Anspruch, **dadurch gekennzeichnet, dass** jeder Anschlag (11, 12) aus einer Oberfläche zum Blockieren der Translation des Stifts (4) besteht, die senkrecht zur Einführungsrichtung des Stifts (4) in die Öffnung (13) orientiert ist und der Wand (5) der Struktur (1), in der die Öffnung (13) ausgebildet ist, zugewandt ist, wobei die Blockierungsoberfläche geeignet ist, die Wand (5) der Struktur (1) zu kontaktieren.

4. Vorrichtung nach einem der Ansprüche 2 und 3, **dadurch gekennzeichnet, dass** die Länge (s) des überdicken Abschnitts (8) der Stange (7) kleiner oder gleich der Stärke der Schaumschicht (2) im komprimierten Zustand ist.

5. Vorrichtung nach einem der vorstehenden Ansprüche, **dadurch gekennzeichnet, dass** ein Hohlraum (16) in der Struktur (1) vorgesehen und der Öffnung (13) in Einführungsrichtung der Stange (7) nachgelagert ist, wobei die Tiefe des Hohlraums (16) mindestens dem Abstand (p) zwischen dem ersten Anschlag (11) und dem Ende der Düse (10) entspricht.

6. Vorrichtung nach einem der vorstehenden Ansprüche, **dadurch gekennzeichnet, dass** die Düse (10) der Stange (7) des Stifts (4) aus einem Zapfen besteht, der sich in Richtung seines freien Endes verjüngt und periphere Blätter (14) umfasst, die geeignet sind, sich in Richtung der Achse der Stange (7) elastisch zu verformen, wenn der Zapfen in die Öffnung (13) aufrastend eingreift.

7. Vorrichtung nach einem der vorstehenden Ansprüche, **dadurch gekennzeichnet, dass** der Stift (4) zwei identische Stangen (7) mit parallelen Bewegungsstrecken umfasst, die geeignet sind, sich in zwei Öffnungen (13) einzuführen, die in der Wand (5) der Struktur (1) ausgebildet sind.

8. Verfahren nach einem der vorstehenden Ansprüche,
**dadurch gekennzeichnet, dass** die Schaumschicht (2) eine allgemeine Bewegungsstrecke aufweist, die die Krümmung des Lendenwirbelsäulenbereichs eines Benutzers reproduziert, wobei die Krümmung einen konkaven Teil umfasst, der sich an einen konvexen Teil anschließt, und beide zusammen eine sinusförmige Strecke bilden, und wobei der Stift (4) am Übergang zwischen dem konkaven und dem konvexen Abschnitt angeordnet ist und geeignet ist, sich relativ zur Wand (5) der Struktur (1) über eine vorgegebene axiale Strecke (d) zu verschieben.

## Claims

1. A device for fastening/pressing an outer covering (3) against a backrest of a seat, including:
- a backrest structure (1) having a peripheral border and a connector;
- a lining (2) covering the structure (1) of the backrest;
- a covering (3) attached to the peripheral border of the structure (1) of the backrest and covering the lining (2);
- an intermediate member of the fastening pin type (4) provided with an outer head (6) pressed on the covering (3) and a shank (7) secured to said head (6) and extending through the lining (2), the free end of the shank (7) consisting of an end piece (10) being fixed in the connector such that an axial travel of the member in the connector occurs when pressure is applied to the covering (3) and the lining (2),
**characterized in that** the mechanical connection between the pin (4) and the structure (1) allows an axial travel (d) of the pin (4), and **in that** the axial travel (d) of the pin (4) is delimited by two stops (11, 12), the first stop (11) being activated in the insertion direction of the shank (7) through the foam layer (2) and the structure (1) so as to limit its insertion into the orifice (13), the second stop (12) being activated in the removal direction of the shank (7) so as to prevent it from leaving the orifice (13), the first stop (11) consisting of a shoulder that marks the boundary between an intermediate portion (9) of the shank (7) and an overthickness portion (8) of the shank (7) rejoining the head (6) of the pin (4), and the second stop (12) marking the boundary between said intermediate portion (9) and the end piece (10) of the shank (7).

2. The fastening/pressing device according to claim 1, **characterized in that** the lining (2) consists of a thick resilient layer (e) of foam (2) fastened to the structure (1) of the backrest, the end piece (10) being able to be resiliently clipped in the connector consisting of an orifice (13) of a wall (5) of the structure (1), the length (I) between the head (6) of the pin (4) and the end piece (10) being provided so that the head (6) bears on the covering (3) against the foam (2).

3. The fastening/pressing device according to the preceding claim, **characterized in that** each stop (11, 12) consists of a face blocking the translation of the pin (4) oriented perpendicular to the insertion direction of the pin (4) in the orifice (13) and located across from the wall (5) of the structure (1) in which the orifice (13) is formed, said translational blocking face being able to come into contact with said wall (5) of the structure (1).

4. The pressing device according to one of claims 2 and 3, **characterized in that** the length (s) of the overthickness portion (8) of the shank (7) is less than or equal to the thickness of the foam layer (2) in the compressed state.

5. The pressing device according to one of the preceding claims, **characterized in that** a hollow space (16) is provided in the structure (1) downstream from the orifice (13) in the insertion direction of the shank (7), the depth of said hollow space (16) corresponding at least to the distance (p) separating the first stop (11) from the end of the end piece (10).

6. The pressing device according to any one of the preceding claims, **characterized in that** the end piece (10) of the shank (7) of the pin (4) consists of a post becoming more slender toward its free end and comprising peripheral fins (14) able to deform resiliently toward the axis of the shank (7) when the post is engaged in the orifice (13) for clipping.

7. The pressing device according to one of the preceding claims, **characterized in that** the pin (4) comprises two parallel identical shanks (7) able to be inserted in two orifices (13) formed in said wall (5) of the structure (1).

8. The pressing device according to one of the preceding claims, **characterized in that** the foam layer (2) has an appearance generally reproducing the curvature of the lumbar part of a user's back, said curvature comprising a concave part extending by a convex part together having a sinusoidal appearance, said pin (4) being placed at the junction between the concave part and the convex part and being able to move in translation by a predetermined axial travel (d) relative to the wall (5) of the structure (1) of the backrest of the seat.
